Europäisches Patentamt

European Patent Office

Office européen des brevets

(19)

(11) Veröffentlichungsnummer: **0 073 956**
**B1**

## (12) EUROPÄISCHE PATENTSCHRIFT

(45) Veröffentlichungstag der Patentschrift:
19.03.86

(21) Anmeldenummer: **82107402.8**

(22) Anmeldetag: **14.08.82**

(51) Int. Cl.⁴: **A 62 C 28/00**, A 62 C 3/02,
B 64 D 1/16

(54) **Einrichtung zur Brandbekämpfung.**

(30) Priorität: **04.09.81 CH 5710/81**

(43) Veröffentlichungstag der Anmeldung:
**16.03.83 Patentblatt 83/11**

(45) Bekanntmachung des Hinweises auf die Patenterteilung:
**19.03.86 Patentblatt 86/12**

(84) Benannte Vertragsstaaten:
**AT CH DE FR IT LI SE**

(56) Entgegenhaltungen:
**EP - A - 0 004 955**
**CH - A - 617 353**
**DE - A - 2 718 211**
**FR - A - 482 777**
**US - A - 3 248 074**
**US - A - 3 661 211**
**US - A - 3 688 952**

(73) Patentinhaber: **AIR-ZERMATT AG, Postfach,
CH-3920 Zermatt (CH)**

(72) Erfinder: **Perren, Beat H., Bahnhofstrasse,
CH-3920 Zermatt (CH)**
Erfinder: **Talacko, Radovan, Sturzeneggerstrasse 19,
CH-9015 St. Gallen (CH)**

(74) Vertreter: **Keller, Hartmut et al, Hartmut Keller Dr. René
Keller Postfach 12, CH-3000 Bern 7 (CH)**

## Beschreibung

Die Erfindung bezieht sich auf eine Einrichtung nach dem Oberbegriff des Anspruchs 1.

Einrichtungen dieser Art sind gegenüber solchen, deren Behälter zum Entleeren um eine oberhalb seines Schwerpunktes liegende Achse mittels eines vom Luftfahrzeug aus zu bedienenden Seilzuges gedreht werden muss (US-A- 3 248 074), besonders vorteilhaft, weil ihr Behälter im gefüllten Zustand im labilen Gleichgewicht ist, so dass er sich bei gelöster Arretierung von selbst mit seiner Oeffnung nach unten dreht und sich entleert, und danach im leeren Zustand zuerst wieder im labilen Gleichgewicht ist, so dass er von selbst in seine im leeren Zustand stabile Ruhelage zurückkehrt. Dabei erfolgt die Entleerung so schnell, dass die im Behälter enthaltene Wassermasse als ein Ganzes herabfällt. Dies ermöglicht die Durchführung eines besonders wirksamen Feuerlöschverfahrens, bei dem die Wassermasse im Stechflug gezielt auf die Brandstelle geworfen wird (EP-A-0 004 955).

Bei einer bekannten Einrichtung der eingangs genannten Art (CH-A- 617 353) ist der Behälter in seiner Ruhelage durch ein Klinkengesperre arretiert, dessen Klinke gegen die Kraft einer Feder und die Reibung der aneinander anliegenden Flächen der Klinke und ihres Gegenstückes auszuklinken ist, wobei diese Flächen durch das Drehmoment aneinander gepresst sind, mit dem der gefüllte, im labilen Gleichgewicht befindliche Behälter bestrebt ist, sich zu drehen. Dieses Drehmoment ist dadurch begünstigt, dass deram Luftfahrzeug hängende Behälter -während des Fluges nicht vertikal steht sondern geneigt ist, weil er infolgeseines Luftwiderstandes gegenüber dem Luftfahrzeug zurückbleibt. Wenn das Gesperre den Behälter besonders zuverlässig gegen die Drehung sichern soll - was für den vorliegenden Zweck unerlässlich ist, weil bei unbeabsichtigtem Lösen der Arretierung nicht nur der betreffende Löschvorgang ausfällt, sondern die an unkontrollierter Stelle herabfallende Wassermasse erheblichen Schaden anrichten kann - ist die Federbelastung der Klinke notwendigerweise nennenswert, und die am Gegenstück anliegende Klinkenfläche verläuft zweckmässig so geneigt, dass das Gegenstück beim Ausklinken gegen die Kraft, gegen die das Gesperre sichern soll, bewegt wird. Eine so ausgeführte Klinke wird durch diese Kraft selbsttätig, zuverlässig in ihrer eingeklinkten Lage gehalten, erfordert aber zum Ausklinken eine entsprechend grössere Kraft. Der Klinkenmechanismus wird beim Füllen des Behälters und bei dessen Pendelbewegungen während des Fluges unvermeidlich nass. Das kann zu einer Vereisung und zum Blockieren des Mechanismus führen, wenn sich ein Eiskörper bildet, welcher der Klinkenbewegung im Wege steht oder die Klinke und deren Gegenstück (üblicherweise ein Stift) formschlüssig miteinander verbindet. Die Vereisungsgefahr besteht auch bei über dem Gefrierpunkt liegenden Lufttemperaturen wegen der Verdunstungskälte, die der Rotorwind des für den vorliegenden Zweck überlicherweise verwendeten Helikopters und die relative Luftbewegung in Flugrichtung erzeugt, und die durch Wirbelbildung an der Vorrichtung noch gesteigert wird.

Hier will die Erfindung Abhilfe achaffen.

Durch die im Anspruch 1 gekennzeichnete Erfindung wird die Aufgabe gelöst, eine Einrichtung der einganga genannten Art zu achaffen, deren Behälter auf einfache Weise zuverlässig und leicht lösbar arretierbar ist und bei der ein Blockieren der Arretierung durch Vereisung praktisch ausgeschlossen ist.

Die durch die Erfindung erzielten Vorteile bestehen im wesentlichen darin, dass die den Behälter in seiner Ruhelage arretierende Kraft beliebig gesteigert werden kann, ohne dadurch das Löaen der Arretierung irgendwie zu erschweren, und dass Magnet und Anker leicht so ausgebildet werden können, dass eine Blockierung ihrer gegenseitigen Bewegung durch Vereisung praktisch ausgeschlossen ist. Dabei werden diese Vorteile mit sehr einfachen Mitteln erzielt.

Bei der im Anspruch 2 angegebenen Weiterbildung der Erfindung ist der Anker so beweglich, dass er in Behälterruhelage zuverlässig die gesamte Polfläche des Elektromagneten berührt, so dass dieser seine maximale Haltekraft auf den Anker ausübt. Ausserdem wird dabei die Prellung vermindert, wenn der Behälter nach dem Entleeren in seine Ruhelage zurückkehrt.

Weitere vorteilhafte Ausgestaltungen der Einrichtung ergeben sich aus den Ansprüchen 3 bis 6.

Es ist zwar eine gattungsmässig andere Einrichtung zur Brandbekämpfung bekannt, die einen um eine horizontale Achse drehbar gelagerten Löschflüssigkeitsbehälter hat, der mit einer Ausflussdüse, die in seiner Ruhelage nach oben gerichtet ist, versehen und durch einen ortsfesten Elektromagneten und einen mit dem Behälter verbundenen Magnetanker in seiner Ruhelage gehalten ist (FR-A 482 777). Der Elektromagnet dieser Einrichtung, die ortsfest in einem Raum zu installieren ist liegt in einem Ruhestromkreis in Reihe mit Vorrichtungen, die unter Hitzeeinwirkung den Strom unterbrechen, woraufhin der Behälter kippt und pendelt, so dass in ihm enthaltene Löschflüssigkeitsbestandteile vermischt werden und das Löschflüssigkeitsgemisch aus der Düse ausströmt. Vor der Düse ist eine mit dem Behälter fest verbundene Prallplatte zur allseitigen Verteilung der ausströmenden Flüssigkeit angeordnet. Düse und Prallplatte sind koaxial und die Prallfläche ist senkrecht zur Zylinderachse des zylindrischen Behälters. Der Magnetanker ist an der der Düse abgewandten Seite der Prallplatte befestigt. Die Wirkungsrichtung des Elektromagneten verläuft radial zu der Kreisbogenbahn, an der sich der Anker bei der Drehung des Behälters bewegt. Dabei ist die (maximale) Anziehungskraft des Elektronagneten rechtwinklig zu der Kraft, welcher entgegengewirkt werden muss, um den Behälter in seiner Ruhelage zu halten. Ausserdem ist zwischen dem Elektromagneten und dem Anker unvermeidlich ein Luftspalt, wobei - auch bei kleiner Spaltweite - die Anziehungskraft wesentlich kleiner ist als die Haftkraft bei am Elektromagneten anliegendem Anker.

Im Gegensatz dazu wirkt bei der erfindungsgemässen Einrichtung die (maximale) Anziehungskraft des Elektromagneten nicht rechtwinklig, sondern entgegengesetzt zur Richtung der Kraft, welcher entgegengewirkt werden muss, um den Behälter in Ruhelage zu halten, und der Anker liegt in Behälterruhelage unmittelbar am Elektromagneten an. Damit wird durch die Erfindung gegenüber der gattungsmässig anderen Einrichtung auch die Aufgabe gelöst, eine grössere Haltekraft zu erreichen.

Das ist für Einrichtungen der vorliegenden Gattung funktionswichtig, denn deren Behälter ist während des Fluges Beschleunigungen und Verzögerungen und Pendelbewegungen unterworfen, die bei gefülltem Behälter zu erheblichen Drehmomenten führen, denen der Elektromagnet unbedingt zuverlässig entgegenwirken muss, um den Behälter in Bezug auf den Halter in Ruhelage zu halten. Es ist zu bedenken, dass ein unbeabsichtigtes Entleeren des Behälters nicht nur zu einem Zeitverlust beim Löschen führt sondern auch erhebliche Folgeschäden verursachen kann, weil die Löschflüssigkeit als Ganzes herabfällt, wobei sie eine erhebliche Schlagwirkung hat.

Demgegenüber kann der Behälter der bekannten, gattungsmässig anderen Einrichtung, der in seiner Ruhelage nicht bewegt wird, in einer nahezu ausbalancierten Stellung gehalten werden, wobei nur ein schwaches Drehmoment auf ihn wirkt. Mit der Anordnung von Magnet und Anker dieser bekannten Einrichtung könnte der Behälter einer Einrichtung der vorliegenden Gattung nicht, jedenfalls nicht zuverlässig in Ruhelage gehalten werden.

Bei einer Variante der bekannten, gattungsmässig anderen Einrichtung (FR-A-482 777) ist der Behälter in seiner Ruhelage durch eine mittels eines Elektromagneten ausklinkbare Klinke gehalten. Dies hat den bereits Erwähnten Nachteil, dass die Klinke blockieren kann bzw. durch Vereisung blockiert wird.

Die Erfindung wird im folgenden anhand der Beiliegenden Zeichnungen näher erläutert. Ez zeigen:

Fig. 1 eine Seitenansicht der Einrichtung mit in Ruhelage ausgezogen und in Entleerungslage strichpunktiert dargestelltem Behälter,

Fig. 2 eine teilweise Ansicht in Richtung II von Fig. 1,

Fig. 3 eine teilweise geschnittene Draufsicht in Richtung III-III von Fig. 1, in grösserem Massstab,

Fig. 4 eine Einzelheit von Pig. 1 in grösserem Massstab,

Fig. 5 eine teils geschnittene Ansicht in Richtung V-V von Fig. 4.

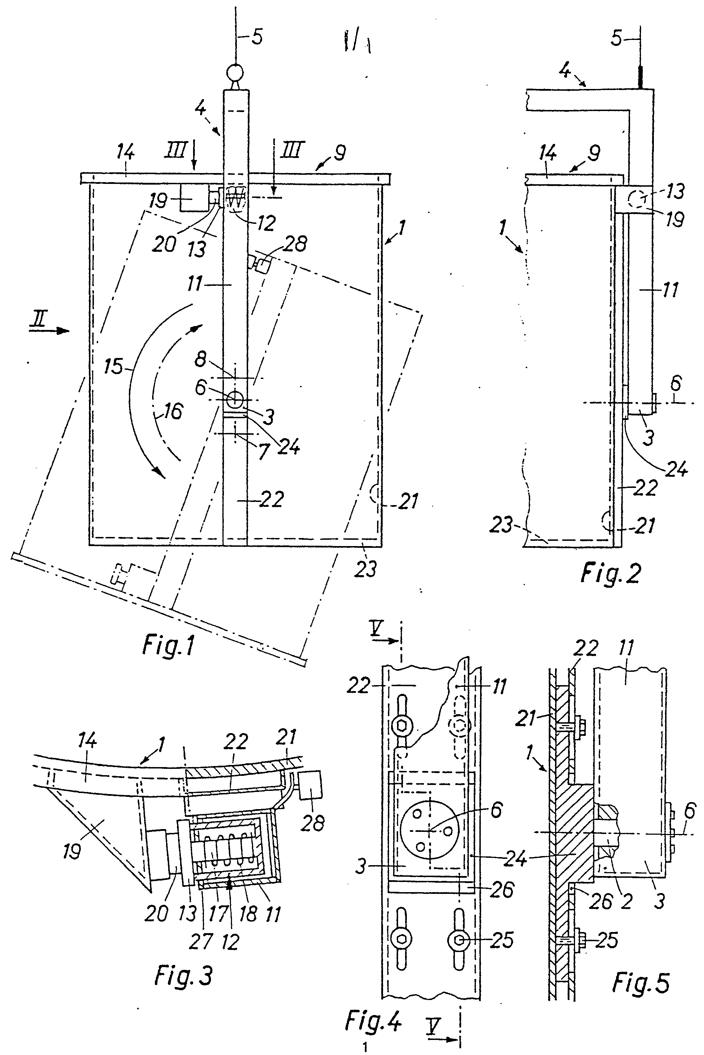

Der oben offene, zylindrische Löschflüssigkeitsbehälter 1 ist mittels Achszapfen 2 an den Schenkelenden 3 einer jochförmigen Haltevorrichtung 4 drehbar gelagert, die an nur teilweise dargestellten Seilen 5 an ein Luftfahrzeug, insbesondere einen Helikopter, zu hängen ist. Die Drehachse 6 verläuft in Behälterruhelage oberhalb des Schwerpunktes 7 des leeren und unterhalb des Schwerpunktes 8 des mit Löschflüssigkeit, in der Regel Wasser, gefüllten Behälters 1, so dass derselbe in dieser Lage im leeren Zustand im stabilen, in gefülltem Zustand im labilen Gleichgewicht ist. Um den Behälter 1 auch im gefüllten Zustand in der ausgezogen dargestellten Ruhelage, in der die Behälteröffnung 9 oben ist, am Joch 4 zu halten, ist in einen der Jochschenkel 11 ein Elektromagnet 12 eingebaut und ein dazu gehöriger Magnetanker 13 am Behälter 1 unterhalb des Randes 14 der Behälteröffnung 9 angebracht. Die Wirkungsrichtung, d.h. die Richtung maximaler Anziehungskraft des Elektromagneten 12 verläuft, wie aus Fig. 1 2 und 3 ersichtlich, tangential zu dem Kreisbogen, auf dem sich der Anker 13 bei Drehung des Behälters 1 um dessen Achse 6 bewegt, In Behälterruhelage liegt der Anker 13 am Elektromagneten 12 an, so dass der Behälter 1 in Ruhelage am Joch 4 gegen Drehung gesichert gehalten ist, solange der Elektromagnet 12 erregt ist. Wird der Erregerstrom unterbrochen, so dreht sich der im gefüllten Zustand im labilen Gleichgewicht befindliche Behälter 1 durch seine eigene Schwerkraft in Richtung 15 in seine strichpunktiert dargestellte Lage, in der er sich so plötzlich entleert, dass die Löschflüssigkeit als ein Ganzes herabfällt. Der danach leere Behälter ist im labilen Gleichgewicht, er dreht sich durch seine eigene Schwerkraft in Richtung 16 in die im leeren Zustand stabile Ruhelage zurück, in der er durch Erregung des Magneten 12 wieder am Joch 4 gegen Drehung gesichert gehalten werden kann.

Der Elektromagnet 12 hat einen topfförmigen Kern mit Mittelpol 17, seine Wicklung 18 ist durch eine nicht dargestellte Leitung von der elektrischen Anlage des Luftfahrzeuges gespeist, dabei ist ein vom Piloten zu betätigender, nicht dargestellter Schalter zum Unterbrechen des Erregerstromes vorgesehen. Der Anker 13 ist von einer am Behälter 1 befestigten Konsole 19 getragen, mit der er durch ein gummielastisches Verbindungsstück 20 verbunden ist, das es ihm ermöglicht, seine Lage der Polebene des Elektromagneten 12 so anzupassen, dass er dicht unmittelbar an den Polen anliegt, so dass der Elektromagnet 12 seine maximale Haltekraft entwickelt.

Die Schwerkraft des Behälters 1 wird auf die Achszapfen 2 durch zwei längs Behältermantellinien verlaufende Profilleisten 22 übertragen, die fest mit dem Behältermantel 21, dem verstärkten Behälterrand 14 und dem in nicht dargestellter Weise durch ein Stützgitter verstärkten Behälterboden 23 verbunden sind. Dabei können die Achszapfen 2 zur Einstellung der Lage der Drehachse 6 je an einem Schieber 24 angeordnet sein, der in der Leiste 22 verschiebbar, durch Schrauben 25 in seiner Lage festklemmbar ist und durch eine Aussparung 26 der Leiste 22 hindurchragt. Bei dieser Ausführungsart sind zuerst die Schieber 24 einzustellen und festzuklemmen, danach ist der Elektromagnet 12 in Ruhelage des Behälters 1 in der Lage am Jochschenkel 11 zu befestigen, in welcher er mit dem Anker 13 fluchtet. Zu diesem Zweck sind die Pole des Elektromagneten in eine Platte 27 eingesetzt, die eine Oeffnung im aus Vierkantrohr bestehenden Jochschenkel 11 bedeckt, die es ermöglicht, die Platte 27 zur Einstellung der Lage des Elektromagneten 12 zu verschieben. Die Platte 27 wird nachdieser Einstellung am Jochschenkel 11 befestigt. Eine solche Einstellbarkeit des Elektromagneten 12 kann auch ohne Verstellbarkeit der Drehachse zweckmässig sein. Natürlich könnte grundsätzlich auch die Lage des Ankers 13 am Behälter 1 in bezug auf den Elektromagneten 12 verstellbar sein.

An der den Magnetpolen gegenüber liegenden Seite des Jochschenkels 11 ist ein Puffer 28 aus gummiartigem Material befestigt, an den die Leiste 22 am Ende der Behälterdrehung 15 anstösst. Dadurch wird sichergestellt, dass der Behälter 1 sich in der Richtung 15 um weniger als 180° dreht und nach dem Entleeren in seine Ruhelage in der Richtung 16 zurückkehrt, in welcher der Anker 13 wieder vor die Pole des Elektromagneten 12 kommt.

**Patentansprüche**

1. Einrichtung zur Brandbekämpfung, mit einem oben offenen Löschflüssigkeitsbehälter (1), der in einer an einem Luftfahrzeug zu befestigenden Haltevorrichtung (4) um eine horizontale Achse (6), die in Behälterruhelage, in der die Behälteröffnung (9) oben ist, oberhalb des Schwerpunktes (7) des leeren und unterhalb des Schwerpunktes (8) des gefüllten Behälters (1) verläuft, drehbar gelagert ist und mittels einer lösbaren Arretiervorr·chtung in seiner Ruhelage arretierbar ist, dadurch gekennzeichnet, dass die Arretiervorrichtung einen an der Haltevorrichtung (4) angeordneten Elektromagneten (12) mit zur Behälterdrehung (15 16) wenigstens annähernd tangentialer Wirkungsrichtung und einen diesem (12) zugeordneten, am Behälter (1) angeordneten Magnetanker (13) aufweist, welcher in der Ruhelage des Behälters (1) am Elektromagneten (12) anliegt.

2. Einrichtung nach Anspruch 1, dadurch gekennzeichnet, dass der Anker (13) durch ein gummielastisches Verbindungsstück (20) mit einem am Behälter (1) befestigten Träger (19) verbunden ist.

3. Einrichtung nach Anspruch 1 oder 2, dadurch gekennzeichnet, dass der Elektromagnet (12) und der Anker (13) in der Ruhelage des Behälters (1) tiefer liegen als der Rand (14) der Behälteröffnung (9).

4. Einrichtung nach einem der Ansprüche 1 bis 3, dadurch gekennzeichnet, dass der Elektromagnet (12) in einen Hohlraum eines Teiles (11) der Haltevorrichtung (4) eingebaut ist.

5. Einrichtung nach einem der Ansprüche 1 bis 4, dadurch gekennzeichnet, dass die Lage der Drehachse (6) am Behälter (1) vorzugsweise durch einstellbar befestigte Achszapfen (2) einstellbar ist und dass der Elektromagnet (12) an der Haltevorrichtung (4) oder der Anker (13) am Behälter (1) in eine Lage, in der bei eingestellter Drehachse (6) der Elektromagnet (12) und der Anker (13) in Behälterruhelage miteinander fluchten, einstellbar und in dieser Stellung fixierbar ist.

6. Einrichtung nach einem der Ansprüche 1 bis 5, dadurch gekennzeichnet, dass die Pole des Elektromagneten (12) in Oeffnungen einer Platte (27) sitzen, die in der Stellung, in der der Elektromagnet (12) in Ruhelage des Behälters (1) mit dem Anker (13) fluchtet, an der Haltevorrichtung (4) befestigt ist.

**Claims**

1. Equipment for fire-fighting comprising an upwardlyopen extinguisher fluid container (1), which is mounted in a retaining device (4) that is to be fastened to an aircraft so as to be rotatable about a horizontal axis (6), which, in the rest position of the container in which the container opening (9) is at the top, extends above the centre of gravity (7) of the empty container (1) and below the centre of gravity (8) of the filled container (1), and is lockable in its rest position by means of a releasable locking device, characterised in that the locking device comprises an electromagnet (12), arranged on the retaining device (4) and having an effective direction at least approximately tangential to the container rotation (15, 16), and a magnet armature (15) which is associated with the electromagnet (12), and which is arranged on the container (1), and, in the rest position of the container (1), butts against the electromagnet (12).

2. Equipment according to claim 1, characterised in that the armature (15) is connected to a carrier (19) fastened to the container (1) by means of a rubberelastic connecting piece (20).

3. Equipment according to claim 1 or 2, characterised in that the electromagnet (12) and the armature (15), in the rest position of the container (1), lie lower than the edge (14) of the container opening (9).

4. Equipment according to one of claims 1 to 5, characterised in that the electromagnet (12) is installed into a cavity in a part (11) of the retaining device (4).

5. Equipment according to one of claims 1 to 4, characterised in that the position of the axis of rotation (6) on the container (1) is adjustable, preferably by adjustably-fastened pivot pins (2), and in that the electromagnet (12) on the retaining device (4) or the armature (15) on the container (1) is adjustable into a position in which, with the axis of rotation (6) adjusted, the electromagnet (12) and the armature (15) are in alignment with one another in the rest position of the container, and is fixable in this position.

6. Equipment according to one of claims 1 to 5, characterised in that the poles of the electromagnet (12) are seated in openings of a plate (27) which is fastened to the retaining device (4) at the position in which the electromagnet (12) in the rest position of the container (1) is in alignment with the armature (13).

## Revendications

1. Dispositif de lutte contre l'incendie, comportant un réservoir (1) à liquide extincteur ouvert en partie haute qui est monté rotatif, dans un dispositif de retenue (4) devant être fixé à un aéronef, autour d'un axe horizontal (6) qui, dans la position de repos du réservoir dans laquelle l'ouverture (9) de ce réservoir se trouve en haut, s'etend au-dessus du centre de gravité (7) du reservoir vide et au-dessous du centre de gravite (8) du réservoir empli (1), et qui peut être arrêté dans sa position de repos au moyen d'un dispositif d'arrêt amovible, caractérisé par le fait que le dispositif d'arrêt presente un electro-aimant (12) situé sur le dispositif de retenue (4), ayant une direction d'action au moins approximativement tangentielle à la rotation (15, 16) et un induit magnetique (13), associé à ce dernier (12) et dispose sur le reservoir (1), qui est applique contre l'electro-aimant (12) dans la position de repos du réservoir (1).

2. Dispositif selon la revendication 1, caractérisé par le fait que l'induit (13) est relié, par l'intermédiaire d'une piece de jonction (20) en caoutchouc elastique, à un support (19) fixe au reservoir (1).

3. Dispositif selon la revendication 1 ou 2, caractérisé par le fait oue l'electro-aimant (12) etl'induit (13) sont situés plus bas que le bord (14) de l'ouverture (9) du reservoir dans la position de repos de ce reservoir (1).

4. Dispositif selon l'une desrevendications 1 à 3, caractérisé par le fait que l'electro-aimant (12) est incorpore dans une cavité d'une partie (11) du dispositir de retenue (4).

5. Dispositif selon l'une des revendications 1 à 4, caractérisé par le fait que la position de l'axe de rotation (6) sur le reservoir (1) peut être ajustée,

de préférence, par l'intermédiaire de tourillons (2) fixés avecfaculte de réglage; et par le fait quel'electro-aimant (12) ou l'induit (13) peut être ajuste, respectivement sur le dispositif de réetenue (4) et sur le reservoir (1), à une position dans laquelle l'électroaimant (12) et l'induit (13) sont mutuellement alignés en condition de repos du réservoir lorsoue l'axe de rotation (6) est ajusté, et peut être maintenu fermement dans cette position.

6. Dispositif selon l'une des revendications 1 à 5, caractérisé par le fait que les pôles de l'électro-aimant (12) se trouvent dans des orifices d'une plaque (27) qui est fixée au dispositif de retenue (4) dans la position dans laquelle, en condition de repos du réservoir (1), l'électro-aimant (12) est aligné avec l'induit (13).

1/1

Fig.1

Fig.2

Fig.3

Fig.4

Fig.5